# EUROPEAN PATENT APPLICATION

(11) **EP 1 215 628 A2**
(43) Date of publication of application: **19.06.2002**
(21) Application number: 01129245.5
(22) Date of filing: 11.12.2001
(51) Int. Cl.: G06T 11/20

(54) **Three-dimensional graph display apparatus**

(30) Priority: 11.12.2000 JP 2000376284
(71) Applicant: K-Plex Inc., San Jose, CA 95134 (US); Papyrus Computer System Inc., Tokyo (JP)
(72) Inventor: Oikawa, Kazushige, San Jose, CA 95134 (US); Tanaka, Yuzuru, Sapporo-shi, Hokkaido (JP); Teruuchi, Tomoru, San Jose, CA 95134 (US)
(74) Representative: HOFFMANN - EITLE

(57) **Abstract**

A three-dimensional graph display apparatus is provided for dynamically changing a display format for a three-dimensional graph. In a simulator of a three-dimensional object shape model wherein a three-dimensional object shape model is comprised of two objects, i.e., an object which has data related to properties of a target three-dimensional object (referred to as the "model object") and an object having data required to display the object (referred to as the "display object"); data of a plurality of model objects can be linked to one another; and the model object can be shared by a plurality of display objects, three-dimensional point data saved in a database is retrieved and the retrieved three-dimensional point data is converted to three-dimensional objects and an object (container object) having the three-dimensional objects representing the three-dimensional point data as slot values in its model object is provided.

## Description

The present invention relates generally to a system for displaying and managing three-dimensional graphs, and more particularly, to implementation of an apparatus for retrieving three-dimensional point data saved in a database and displaying the data in the form of a graph in a flexible fashion.

A variety of apparatuses for displaying a plurality of point data in the form of a three-dimensional graph have been proposed, such as a static apparatus which simply maps coordinate values of point data to a three-dimensional space and projects the mapped point data onto a two-dimensional space within a CRT screen. Among these conventional apparatuses, those using simulation based on three-dimensional object shape modeling have proven to be relatively successful in terms of versatility of functions, etc.

In conventional modeling for a three-dimensional object shape, coordinate values of a three-dimensional object, attribute values for displaying the object, etc. are represented as a single collective object, whereby management of three-dimensional object shape models becomes substantially simple.

However, since an object representing a certain model can be used only for the model, in order to represent another model which is the same as the model in data but is different from the model only in a certain attribute value, an additional object which is almost identical to the object except for the attribute value is required. Therefore, the greater the number of models to be represented, the greater the number of objects; that is, the amount of data, increases linearly, which results in less available storage capacity of the system.

Further, mere modification of display (view) of a model still requires modification of an entire object of the model. Therefore, for example, when object data is saved in a database for management, high overhead for operations such as input/output involved in modification is incurred and simulation processing efficiency deteriorates.

Therefore, since a three-dimensional graph display apparatus for displaying a three-dimensional graph based on a system such as that described above has a fixed coordinate system, data must be re-generated even when the same graph is displayed in a different display format. Also, in a system where three-dimensional point data to be displayed is saved in a database and the data is displayed in the form of a three-dimensional graph, a display format is usually fixed and cannot be dynamically changed. For this reason, a data set corresponding to a desired display format must be provided in advance on a database.

In view of the aforementioned situation, it is an object of the present invention to provide a three-dimensional graph display apparatus capable of dynamically changing a format for displaying a three-dimensional graph based on a system where a three-dimensional object is implemented as a reusable or applicable object.

The present invention provides a simulator for a three-dimensional object shape model wherein a three-dimensional object shape model is comprised of two objects, i.e., an object which has data related to properties of a target three-dimensional object (hereafter referred to as the "model object") and an object having data required to display the object (hereafter referred to as the "display object"); data of a plurality of model objects can be linked to one another; and one of the model objects can be shared by a plurality of display objects. In a system having the aforementioned simulator as a base, the simulator is further provided with a mechanism for retrieving three-dimensional point data saved in a database and converting the retrieved three-dimensional point data to a three-dimensional object in a base system such as mentioned above.

Still, the foregoing mechanism allows only a single operation at a time on each three dimensional point data (or a three-dimensional object) and cannot perform batch processing for changing display coordinate systems, etc. Thus, with a view to obviating this problem, the present invention is still further provided with an object (hereafter referred to as a container object) having three-dimensional objects representing three-dimensional point data as slot values of a model object.
Fig. 1 is a block diagram describing a system environment of the present invention;
Fig. 2 is a schematic diagram illustrating an object according to the present invention;
Fig. 3 is a schematic diagram illustrating a rotating object according to the present invention;
Fig. 4 is a diagram illustrating a flow of messages at the time of change of a parent object in accordance with the present invention;
Fig. 5 is a diagram illustrating a flow of messages at the time of change of a child object in accordance with the present invention;
Fig. 6 is an explanatory diagram illustrating how a model object is shared in accordance with the present invention;
Fig. 7 is a diagram illustrating a relationship between a container object, point objects and graph objects providing two different display formats when slots are linked; and
Fig. 8 is a diagram illustrating a relationship between a container object, point objects and graph objects providing two different display formats when a model object is shared.

An embodiment of the present invention will hereinafter be described with reference to the accompanying drawings.

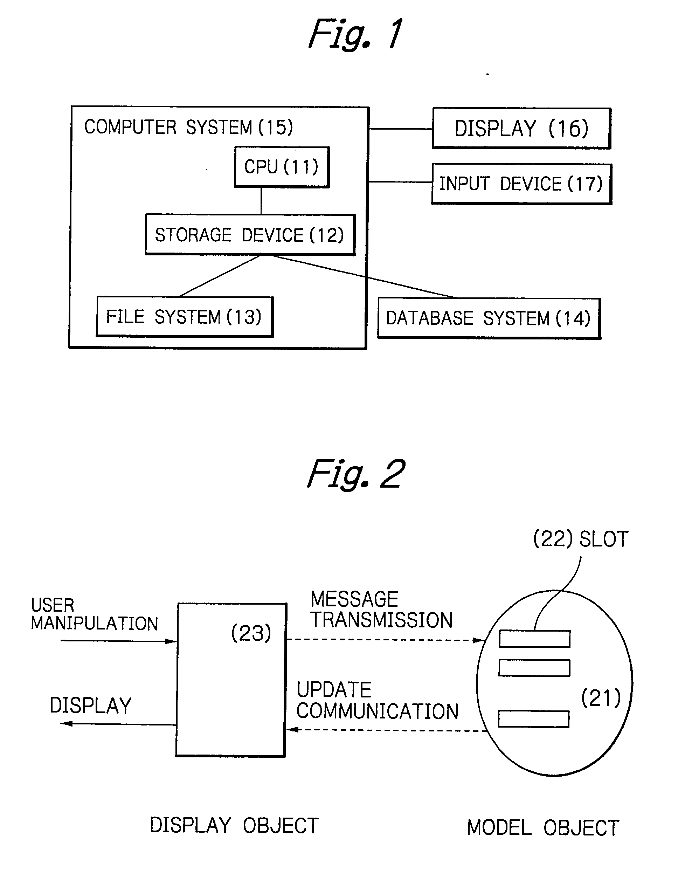

Fig. 1 is a block diagram describing a system environment in which a three-dimensional graph display apparatus of the present invention is implemented. In Fig. 1, a computer system 15 comprises a CPU 11, a storage device 12 and a file system 13 and is connected to a database system 14, a display 16 and an input device 17. The database system 14 may be a system directly coupled to the computer system 15, or a distributed network system which independently comprises a CPU and so on and is connected to the computer system 15 through a communication line.

In the system environment as illustrated above, objects having a configuration such as illustrated in Fig. 2 are implemented as a method of representing a three-dimensional shape model.

In Fig. 2, a model object 21 holds data (internal state) concerning properties of a three-dimensional object as a target for simulation, and methods related thereto. Of the data and methods, those which are accessible from the outside for reference and update are referred to as "slots 22". A display object 23 has data required to display a three-dimensional object held by a model object (display properties) and methods related thereto and receives a manipulation event from a user to display to the user a three-dimensional object as a subject of simulation in association with the model object.

The model object can synthesize a plurality of models by means of slot link, which will be described later.

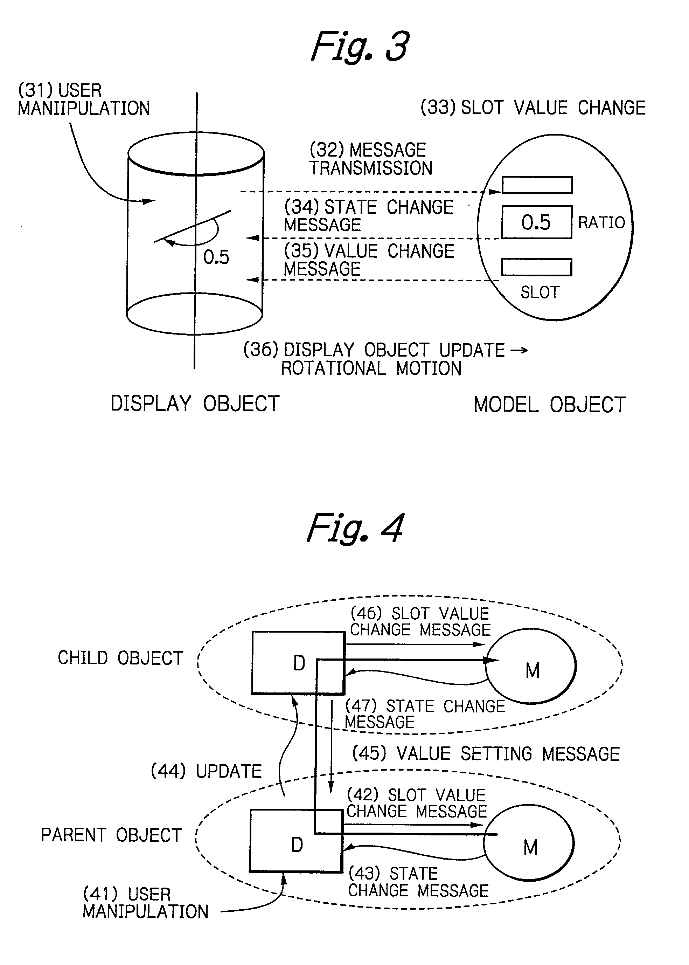

Referring next to Fig. 3, an associative operation between a model object representing a rotating three-dimensional object and its display object will be described as an example

These objects communicate with each other to notify each other of a change in state when a user event (user manipulation) occurs, etc. The example of Fig. 3 shows a "rotating object", wherein a rotational operation is performed on a displayed three-dimensional object. Fig. 3 illustrates a flow of processing (31) ∼ (36) involved in the associative operation performed by a model object constituting the rotating object and its display object.

### User Manipulation (31):

The display object receives a user's rotation manipulation from the input device 17. It is assumed here that a 180 degree-rotation (which is defined as 0.5 with 360 degrees being regarded as 1) is instructed by the user manipulation.

### Message Transmission (32):

The display object notifies the model object that a 180 degree-rotation manipulation has occurred.

### Slot Value Change (33):

Upon receipt of the message to the effect that a 180 degree-rotation manipulation has occurred, the model object changes a ratio slot value indicative of a degree of rotation (changing the value 0 to 0.5).

When the rotating object is defined, for example, as an object which does not allow a rotation of 360 degrees or more, control may be exercised such that the model object checks the message sent from the display object and if it transpires that a rotation of 360 degrees or more is instructed, the subsequent processing of the procedure is not performed.

### State Change Message (34):

The model object notifies the display object of a change in state, i.e., that the slot value has been changed.

### Value Change Message (35):

The model object notifies the display object of the slot value changed as a result of the state change.

### Display Object Update (36):

The display object displays the model again in such a manner as to reflect the state change sent from the model object.

In a conventional three-dimensional modeling system, a certain object and another object can be combined to be treated as a single object.

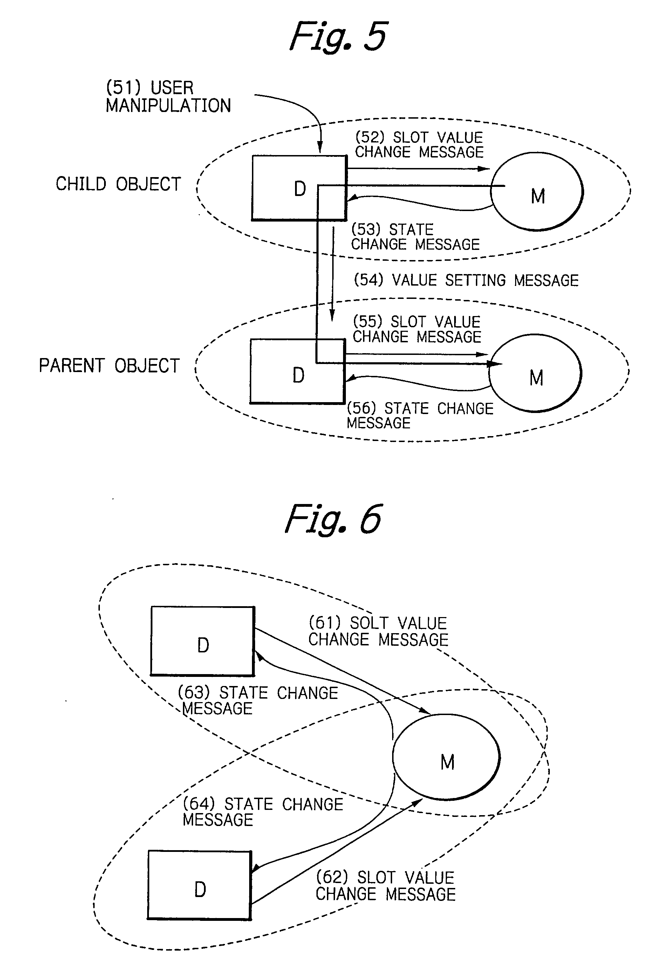

In the present invention, properties of an object representing a three-dimensional model are represented by slots in a model object of each object and by linking slots (slot link) between objects, the objects can be synthesized. Slot link is effected by exchanging a standard message specifically for slot link between objects. Figs. 4 and 5 illustrate a communication protocol for slot link between objects and communications between a display object and a model object in each object. In these drawings, the operations performed in the display object and model object are the same as those described with reference to Fig. 3, so description of these operations will be omitted here for the sake of brevity of explanation. As illustrated, there is a parent-child relationship between synthesized objects, wherein a display coordinate system of a child object is governed by a coordinate system of a parent object. In other words, when the coordinate system of the parent object is changed, for example, moved, rotated, enlarged, reduced, etc. the entire child object changes in accordance with the change of the coordinate system of the parent object. It can be determined on an individual basis which object's slot value (a slot value in a model object of a parent object or a slot value in a model object of a child object) should be changed to be more effective for the synthesized object.

Fig. 4 illustrates a case where a parent object notifies a child object of a change in a slot value within its own model object.

### User Manipulation (41):

A display object of the parent object receives a user manipulation from the input device (17).

### Slot Value Change Message (42):

The display object notifies the model object of the content of the user manipulation.

### State Change Message (43):

The model object notifies its own display object of a change in state, i.e., that its model object has changed a slot value.

### Update Message (44):

The parent object notifies the child object that its own slot value has been changed.

### Value Read Message (45):

Upon receipt of the notice, the child object designates the slot of the parent object and reads its value.

### Slot Value Change Message (46):

The display object of the child object notifies its own model object of the value read from the parent object.

### State Change Message (47):

The model object of the child object notifies its own display object of a change in state, i.e., that it has changed its slot value.

Fig. 5 illustrates a case where when a slot value in a model object of a child object is changed, the child object requests a parent object to change a corresponding slot value in the model object of the parent object.

### User Manipulation (51):

The display object of the child object receives a user manipulation from the input device 17.

### Slot value Change Message (52):

The display object notifies the model object of the content of the user manipulation.

### State Change Message (53):

The model object of the child object notifies its own display object of a change in state, i.e., that it has changed its slot value.

### Setting Message (54):

The child object designates a slot in the model object of the parent object and requests the parent object to change a value of the designated slot.

### Slot Value Change Message (55):

In response to the request from the child object, the display object of the parent object notifies its own model object of a change in the value.

### State Change Message (56):

The model object of the parent object notifies its own display object of a change in state, i.e., that it has changed its slot value.

In the present invention, objects are linked not only by linking slots (as explained above) but also by allowing a single model object to be shared among a plurality of display objects. Fig. 6 illustrates a case where objects are linked by sharing a model object. In Fig. 6, description of a user manipulation on a display object is omitted for the sake of brevity of explanation. When a user manipulation is received by each of the display objects that share the single model object, the display objects send slot value change messages 61, 62 to the shared model object, which then changes its slot value. Once the slot value is changed, the model object broadcasts state change messages 63, 64 to all the display objects sharing the model object. By thus sharing a model object, a plurality of objects need not exchange messages to notify one another of their respective changes, thereby improving efficiency. Also, unlike in the case of a slot link, objects linked by sharing a model object are not required to have a parent-child relationship and therefore, any objects which are not required to have a parent-child relationship can be linked to one another by means of model object sharing.

Generally, a created object is developed in the storage device 12, and is put in the file system 13 for temporary storage. The state prior to storage can be restored by reading a file representing the object put in the file system 13 and developing all the contents in the storage device 12. Eventually, the object is saved in the database system 14 as a permanent object. In this case, the same operation as an operation that would be performed by developing everything in the storage device can be provided if display objects alone are developed in the storage device while leaving a model object in the data base system and the above-described procedure is communicated between the objects. As is clear from the above, the present simulator can effectively and efficiently operate even in a distributed network environment.

Hereafter, implementation of a three-dimensional graph display device based on the above-described three-dimensional model simulator will be specifically described.

As mentioned previously, in a system where three-dimensional point data to be displayed is saved in a database and the data is displayed in the form of a three-dimensional graph, a display format is usually pre-fixed and cannot be dynamically changed. For this reason, a data set corresponding to a display format needs to be provided on a database in advance. In the present invention, three-dimensional point data to be displayed is first retrieved from a database and is then converted to a three-dimensional object and is further developed in a storage device and on the thus developed three-dimensional object, the aforementioned slot link, object link by means of model sharing, etc. is performed, thereby dynamically changing a display format or simultaneously displaying an object in multiple different display formats.

Procedure of the foregoing operation is as follows.
(1) Data to be displayed (data as a display target) is retrieved from a database.
(2) Each of data elements obtained as a result of the retrieval is converted to a three-dimensional object which has a value of the data element as a slot value in its model object.
(3) A container object having the converted three-dimensional objects as slot values in its model object is created. At the time of creation, the container object is developed on a storage device, but is managed on the database if it is used as a permanent object. When using the container object, only its display object is developed in the storage device.
(4) A graph object which defines a display format such as a three-dimensional line graph, a three-dimensional pie chart or the like is linked to the container object. Thereby, the retrieved three-dimensional point data is displayed in the linked graph object's display format.

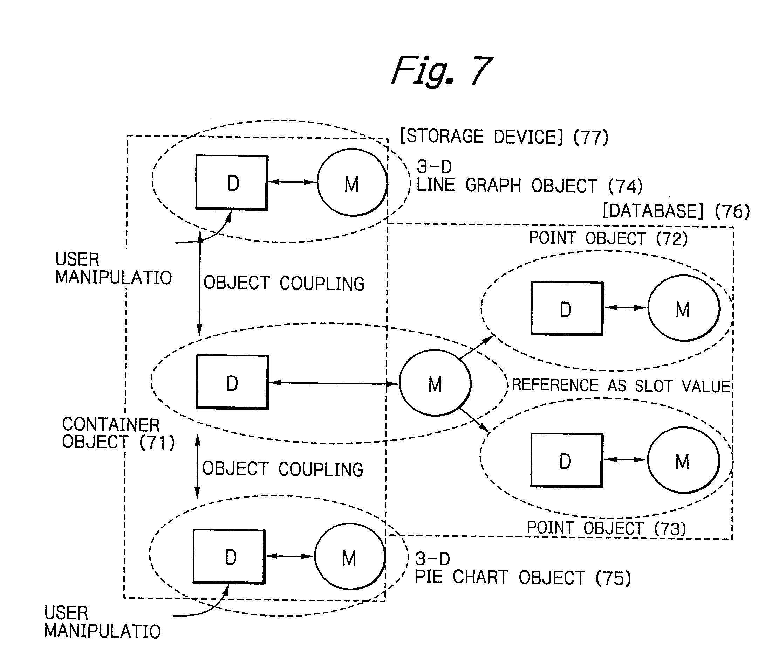

Fig. 7 illustrates a relationship between a container object 71, point objects 72, 73 and graph objects providing two display formats (a three-dimensional line graph 74, and a three-dimensional pie chart 75). In Fig. 7, the point objects 72, 73 are both held on a database 76 and are referred to as slot values of the model object in the container object 71. The display object of the container object and the graph objects are developed in a storage device 77 and are linked by means of the slot link explained above with reference to Figs. 4 and 5.

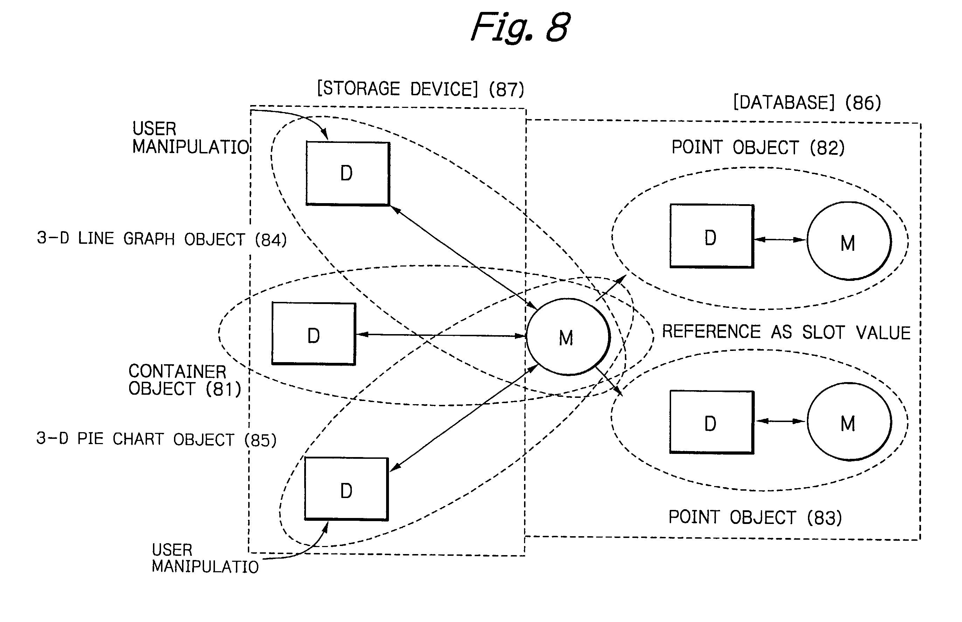

Next, Fig. 8 illustrates a relationship between a container object 81, point objects 82, 83 and graph objects providing two display formats (a three-dimensional line graph 84 and a three-dimensional pie chart 85) when a model object is shared by the graph objects and the container object. In Fig. 8, the point objects 82, 83 are both held on a database 86 and are referred to as slot values of the model object in the container object 81. The display object of the container object and the graph objects are developed in a storage device 87 and are linked by means of model object sharing explained above with reference to Fig. 6.

Since a container object can be regarded as representing a three-dimensional space itself rather than a certain three-dimensional model, a display format that the container object has as its display object can be dynamically switched from one format to another by means of object link. Thus, a display format of a three-dimensional graph using data obtained by means of single database retrieval can be changed in various ways, which makes it unnecessary to create new data corresponding to each graph display format and also obviates a performance bottleneck of data retrieval.

Further, as a model object is placed in a database, a plurality of users can refer to the same data displayed in different formats or change the data. Still further, as a model object is shared by a plurality of users, the contents of change in one user are instantaneously reflected on the other users and thus, a coordinated operation among multiple users becomes viable.

## Claims

1. In a three-dimensional model simulator wherein a three-dimensional shape model is comprised of two objects, that is, a model object having a plurality of slots for holding data related to properties of a target three-dimensional shape and a display object having data required to display the shape, a three-dimensional graph display apparatus comprising:
a point object having three-dimensional point data retrieved from a database as a slot value;
a container object having a plurality of point objects as slot values; and
a graph object for displaying a slot value of said container object.

2. A three-dimensional graph display apparatus according to claim 1, wherein one or more graph objects are linked to said container object by linking slots.

3. A three-dimensional graph display apparatus according to claim 1, wherein one or more graph objects share a model object of said container object.

4. A three-dimensional graph display apparatus according to claim 1, wherein said display apparatus is implemented on a computer system having a local file system and a database system, wherein said point objects are managed on said database system and said graph objects are managed on said file system.

5. A three-dimensional graph display apparatus according to claim 4, wherein said computer system is a distributed network computer system.
